# EUROPÄISCHE PATENTANMELDUNG

(11) **EP 2 873 491 A1**
(43) Veröffentlichungstag der Anmeldung: **20.05.2015**
(21) Anmeldenummer: 13193102.4
(22) Anmeldetag: 15.11.2013
(51) Int. Cl.: B25F 5/00

(54) **Spannungsnachführung bei Tieftemperatur zur Vermeidung von Unterspannungsabschaltungen bei akkubetriebenen handbetriebenen Elektrowerkzeugen**

(71) Anmelder: HILTI Aktiengesellschaft, 9494 Schaan (LI)
(72) Erfinder: Beckert, Benedikt, 86159 Augsburg (DE); Müller, Thomas, 86836 Klosterlechfeld (DE)
(74) Vertreter: Hilti Aktiengesellschaft Corporate Intellectual Property

(57) **Zusammenfassung**

Netzunabhängig betriebenes Elektrowerkzeug enthaltend einen Elektromotor zum Betreiben des Elektrowerkzeugs; einen Akkumulator; eine Überwachungseinrichtung zur Überwachung einer Überwachungsbetriebswertgrenze, wobei die Überwachungsbetriebswertgrenze oberhalb einer Betriebswertgrenze des Akkumulators liegt; ein verstellbares Widerstandsbauelement; und einen Betriebswertregler zum Einstellen wenigstens eines an dem Elektromotor anliegenden Betriebswerts mittels einer Pulsweitenmodulation, wobei ein PWM-Duty-Cycle des Betriebswertreglers zum Einstellen des wenigstens einen Betriebswerts festgelegt wird, der einem ersten Wert oder einem zweiten Wert entspricht, bei dem der erste Wert aus der aktuellen Stellung des Widerstandsbauelements ableitbar ist und der zweite Wert dem zum Einstellen des wenigstens einen Betriebswerts zuletzt verwendeten PWM-Duty-Cycle zuzüglich eines Offset-Werts entspricht, und wobei zum Einstellen des wenigstens einen Betriebswerts der niedrigere des ersten oder zweiten Werts für den PWM-Duty-Cycle gewählt wird, wenn der wenigstens eine Betriebswert des Akkumulators oberhalb der Überwachungsbetriebswertgrenze liegt.

## Beschreibung

Die vorliegende Erfindung betrifft ein netzunabhängig betriebenes Elektrowerkzeug, welches einen Elektromotor zum Betreiben des Elektrowerkzeugs sowie einen Akkumulator enthält. Darüber hinaus enthält das Elektrowerkzeug eine Überwachungseinrichtung zur Überwachung einer Überwachungsbetriebswertgrenze, wobei die Überwachungsbetriebswertgrenze oberhalb einer Betriebswertgrenze des Akkumulators liegt. Des Weiteren enthält das Elektrowerkzeug ein verstellbares Widerstandsbauelement zum Variieren der Leistungsabgabe des Elektromotors sowie einen Betriebswertregler zum Einstellen wenigstens eines an dem Elektromotor anliegenden Betriebswerts mittels einer Pulsweitenmodulation (PWM).

Ferner betrifft die vorliegende Erfindung ein Verfahren zum Steuern eines Elektromotors in einem netzunabhängig betriebenen Elektrowerkzeug durch ein zeitgesteuertes Überwachen einer Überwachungsbetriebswertgrenze mittels einer Überwachungseinrichtung, wobei die Überwachungsbetriebswertgrenze oberhalb einer Betriebswertgrenze eines Akkumulators liegt.

Üblicherweise verfügen handgeführte, akkubetriebene Elektrowerkzeuge, wie z.B. Bohrmaschinen, Schrauber, Sägen o. dgl., über verschiedene Schutz- und Abschaltfunktionen, welche zum Schutz der einzelnen Systeme innerhalb und auch ausserhalb des Elektrowerkzeugs dienen. Hierzu zählt beispielsweise die Unterspannungsabschaltung, die dafür sorgt, das jeweilige Elektrowerkzeug abzuschalten, wenn die Versorgungsspannung eines Akkumulators einen zuvor definierten Grenzwert unterschreitet. Das Abschalten des Elektrogeräts dient dazu, eine Stromentnahme bis zur nahezu vollständigen Erschöpfung der Kapazität des Akkumulators (Gefahr der Tiefentladung) zu vermeiden, die zu einer irreparablen Beschädigung des Akkumulators führen kann. Ebenso dient die Unterspannungsabschaltung auch dem Schutz anderer Systeme, insbesondere der Ansteuerelektronik des Elektrowerkzeugs, vor Fehlfunktion, Beschädigung oder Zerstörung. Die Unterspannungsabschaltung verhindert das weitere Benutzen des Elektrowerkzeugs bis der Akkumulator wieder eine mindestens über den Grenzwert der Versorgungsspannung liegende Spannung abgibt. Eine derartige Unterbrechung des Verwendens des Elektrowerkzeugs durch die Unterspannungsabschaltung stellt für den Anwender eine erhebliche Beeinträchtigung dar, da ein unterspannungsbedingtes Abschalten mit einer relativ langen Wartezeit bis zur Fortsetzung des Verwendens des Elektrowerkzeugs verbunden ist.

Extreme Umwelteinflüsse, insbesondere tiefe Temperaturen, d.h. Temperaturen, die deutlich unterhalb der gewöhnlichen Raumtemperatur von ca. 18°C liegen, verursachen eine teilweise drastische Leistungsreduktion bei Akkumulatoren. Ursächlich dafür ist, dass bei Kälte die chemischen Prozesse langsamer ablaufen und die Viskosität der insbesondere in Li-Zellen verwendeten Elektrolyte stark zunimmt, gleichzeitig erhöht sich bei Akkumulatoren und speziell bei Lithium-Ionen-Akkumulatoren bei Kälte deren Innenwiderstand. Die Abnahme der abgebbaren Leistung (Spannung) eines Akkumulators führt wiederum dazu, dass der Grenzwert der Versorgungsspannung bei Benutzung des Elektrogeräts noch früher unterschritten wird. Insbesondere durch Lastspitzen, die bei einer zeitweilig hohen Leistungsabfrage durch den Elektromotor auftreten können (z.B. für ein höheres Drehmoment) kann der Grenzwert der Versorgungsspannung schnell unterschritten werden. Als Folge hiervon greift die Unterspannungsabschaltung in die Steuerung des Elektromotors ein und unterbricht die Leistung des Elektromotors zumindest temporär, um Schäden an dem Akkumulator und an den anderen Systemen zu vermeiden. Hierdurch kommt es immer wieder zu unerwünschten Unterbrechungen bei der Anwendung des Elektrowerkzeugs für den Benutzer.

Aufgrund der potentiellen Gefahr der Tiefentladung sowie der damit verbundenen möglichen Beschädigung eines Akkumulators kann einerseits weder auf eine ständige Überwachung der Akkuspannung noch auf eine effektive Unterspannungsabschaltung in einem Elektrowerkzeug verzichtet werden. Andererseits führt ein ständiges Abschalten des Elektrogeräts, insbesondere bei tiefen Umgebungstemperaturen, durch die Unterspannungsabschaltung zu einem ineffizienten Arbeiten mit dem Elektrowerkzeug oder verhindert dieses insgesamt. Darüber hinaus verhindert das regelmässige Abschalten des Elektromotors die Möglichkeit, dass sich der Elektromotor und damit das Elektrogerät sowie der Akkumulator selbst erwärmen können, um dadurch ein temperaturbedingtes Abschalten durch die Unterspannungsabschaltung vermeiden zu können.

Des Weiteren besteht ein Problem, wenn die Akkuspannung aufgrund einer Laständerung am Elektromotor wieder plötzlich steigt. Eine derartige Laständerung kann insbesondere durch eine Lastreduktion am Elektromotor aufgrund der Herabsetzung des aufzubringenden Drehmoments oder durch eine Erhöhung der Akku-Temperatur aufgrund einer Eigenerwärmung des Elektrowerkzeugs geschehen. In den Fällen der Laständerung steigt die Akkuspannung wieder über die Überwachungsspannungsgrenze, woraufhin die Steuerung wieder von einer ausreichenden Akkuspannung ausgeht und der PWM-Duty-Cycle des Spannungsreglers zum Einstellen der Betriebsspannung wieder direkt aus der aktuellen Stellung des Potentiometers abgeleitet wird. Diese erhöhte Betriebsspannung führt in den meisten Fällen wieder unmittelbar zum Absinken der Akkuspannung unterhalb der Überwachungsspannungsgrenze und damit zu einer Art Schwingungsverhalten zwischen der Reduktion der Betriebsspannung bzw. der PWM-Duty-Cycle des Spannungsreglers und dem Normalbetrieb ohne eine derartige Reduktion. Ebenso können durch die sprunghafte Änderung der Akkuspannung so schnelle Spannungseinbrüche entstehen, die trotzdem zu einer Abschaltung des Elektrowerkzeugs führen.

Eine Aufgabe der vorliegenden Erfindung besteht darin, die vorstehend beschriebene Problematik zu lösen und dazu ein netzunabhängig betriebenes Elektrowerkzeug sowie ein Verfahren zum Steuern eines Elektromotors in einem netzunabhängig betriebenen Elektrowerkzeug bereitzustellen, um eine effektive Verwendung eines Akkumulators zum Betreiben eines Elektrowerkzeugs zu gewährleisten.

Die Aufgabe wird erfindungsgemäss durch ein netzunabhängig betriebenes Elektrowerkzeug gelöst, welches einen Elektromotor zum Betreiben des Elektrowerkzeugs sowie einen Akkumulator enthält. Darüber hinaus enthält das Elektrowerkzeug eine Überwachungseinrichtung zur Überwachung einer Überwachungsbetriebswertgrenze, wobei die Überwachungsbetriebswertgrenze oberhalb einer Betriebswertgrenze des Akkumulators liegt. Des Weiteren enthält das Elektrowerkzeug ein verstellbares Widerstandsbauelement zum Variieren der Leistungsabgabe des Elektromotors sowie einen Betriebswertregler zum Einstellen wenigstens eines an dem Elektromotor anliegenden Betriebswerts mittels einer Pulsweitenmodulation (PWM).

Erfindungsgemäss wird ein PWM-Duty-Cycle des Betriebswertreglers zum Einstellen des wenigstens einen Betriebswerts festgelegt, der einem ersten Wert oder einem zweiten Wert entspricht, bei dem der erste Wert aus der aktuellen Stellung des Widerstandsbauelements ableitbar ist und der zweite Wert dem zum Einstellen des wenigstens einen Betriebswerts zuletzt verwendeten PWM-Duty-Cycle zuzüglich eines Offset-Werts entspricht, wobei zum Einstellen des wenigstens einen Betriebswerts der niedrigere des ersten oder zweiten Werts für den PWM-Duty-Cycle gewählt wird, wenn der wenigstens eine Betriebswert des Akkumulators oberhalb der Überwachungsbetriebswertgrenze liegt. Hierdurch wird vermieden, dass der wenigstens eine Betriebswert eines Akkumulators zu schnell wieder unter die Betriebswertgrenze des Akkumulators sinkt, wodurch ein Abschalten des Elektromotors zum Schutz des Akkumulators oder anderer Systeme vermieden und gleichzeitig die Verwendung des Elektrowerkzeugs fortgesetzt werden kann. Bei dem Betriebswert kann es sich beispielsweise um einen Spannungswert handeln. Es ist jedoch auch möglich, dass es sich bei dem Betriebswert um die Stromstärke oder ähnliches handelt. Darüber hinaus ist es auch möglich, dass der Betriebswert der Betriebszustand, d.h. der eingeschaltete Zustand oder der ausgeschaltete Zustand des Elektrowerkzeugs ist.

Gemäss einer Ausgestaltungsform der vorliegenden Erfindung kann die Betriebswertgrenze in Abhängigkeit zu einem Temperaturwert einstellbar sein. Bei dem Temperaturwert kann es sich beispielsweise um die Temperatur des Akkumulators oder um die Temperatur des Elektrogeräts handeln. Es ist jedoch auch möglich, dass der Temperaturwert der Temperatur des Akkumulators und der Temperatur des Elektrogeräts entspricht. Das heisst, dass der Temperaturwert entweder nur an die Temperatur des Akkumulators oder nur an die Temperatur des Elektrogeräts ohne Berücksichtigung der Temperatur des Akkumulators einstellbar ist. Darüber hinaus kann es auch möglich sein, dass sich der Temperaturwert aus einer Kombination der Temperatur des Akkumulators sowie der Temperatur des Elektrogeräts ergibt. Des Weiteren kann es auch möglich sein, dass für den Temperaturwert zusätzlich oder ausschliesslich die Umgebungstemperatur des Akkumulators und/oder des Elektrogeräts für die Einstellung der Betriebswertgrenze berücksichtigt wird.

In Abhängigkeit vom jeweiligen Temperaturwert kann die Betriebswertgrenze niedriger oder höher eingestellt werden. Hierbei ist vorgesehen, dass bei einem tiefen Temperaturwert die Betriebswertgrenze niedriger eingestellt wird, wobei jedoch zu beachten ist, dass die Betriebswertgrenze stets unterhalb der Überwachungsbetriebswertgrenze liegt. Dementsprechend wird bei einem tiefen Temperaturwert die Betriebswertgrenze höher eingestellt.

Entsprechend einer weiteren Ausgestaltungsform kann der Offset-Wert einem prozentualen Anteil des zuletzt verwendeten PWM-Duty-Cycle zur Ansteuerung des Elektromotors entsprechen. Insbesondere kann der prozentuale Anteil einem Wert zwischen 2% bis 20% des zuletzt verwendeten PWM-Duty-Cycle zur Ansteuerung des Elektromotors entsprechen. Es ist jedoch auch möglich, dass ein höherer oder auch niedrigerer Offset-Wert in Abhängigkeit zu einem Temperaturwert verwendet werden kann. Bei dem Temperaturwert kann es sich beispielsweise um die Temperatur des Akkumulators oder um die Temperatur des Elektrogeräts handeln. Es ist jedoch auch möglich, dass der Temperaturwert der Temperatur des Akkumulators und der Temperatur des Elektrogeräts entspricht. Das heisst, dass der Temperaturwert entweder nur an die Temperatur des Akkumulators oder nur an die Temperatur des Elektrogeräts ohne Berücksichtigung der Temperatur des Akkumulators einstellbar ist. Darüber hinaus kann es auch möglich sein, dass sich der Temperaturwert aus einer Kombination der Temperatur des Akkumulators sowie der Temperatur des Elektrogeräts ergibt. Des Weiteren kann es auch möglich sein, dass für den Temperaturwert zusätzlich oder ausschliesslich die Umgebungstemperatur des Akkumulators und/oder des Elektrogeräts für die Einstellung der Betriebswertgrenze berücksichtigt wird.

Um eine regelmässige Überwachung der Spannungswerte des Akkumulators sicherzustellen, kann eine zeitgesteuerte Überwachungsvorrichtung zum periodischen Überwachen des wenigstens einen Betriebswerts des Akkumulators vorgesehen sein.

Die zeitgesteuerte Überwachungsvorrichtung kann gemäss einer Ausgestaltungsform der vorliegenden Erfindung so ausgestaltet sein, dass in zeitlichen Abständen den wenigstens einen Betriebswert des Akkumulators überwacht wird. Insbesondere kann der zeitliche Abstand einem Wert zwischen 1ms bis 100ms entsprechen. Es ist jedoch auch möglich, dass grössere oder kleinere zeitlichen Abständen zur Überwachung des wenigstens einen Betriebswerts des Akkumulators in Abhängigkeit zu einem Temperaturwert verwendet werden können. Bei dem Temperaturwert kann es sich beispielsweise um die Temperatur des Akkumulators oder um die Temperatur des Elektrogeräts handeln. Es ist jedoch auch möglich, dass der Temperaturwert der Temperatur des Akkumulators und der Temperatur des Elektrogeräts entspricht. Das heisst, dass der Temperaturwert entweder nur an die Temperatur des Akkumulators oder nur an die Temperatur des Elektrogeräts ohne Berücksichtigung der Temperatur des Akkumulators einstellbar ist. Darüber hinaus kann es auch möglich sein, dass sich der Temperaturwert aus einer Kombination der Temperatur des Akkumulators sowie der Temperatur des Elektrogeräts ergibt. Des Weiteren kann es auch möglich sein, dass für den Temperaturwert zusätzlich oder ausschliesslich die Umgebungstemperatur des Akkumulators und/oder des Elektrogeräts für die Einstellung der Betriebswertgrenze berücksichtigt wird.

Gemäss einer weiteren vorteilhaften Ausgestaltung der vorliegenden Erfindung ist auch möglich, dass die Überwachungsbetriebswertgrenze durch eine Überwachungsspannungsgrenze, die Betriebswertgrenze durch eine Unterspannungsgrenze, der Betriebswertregler durch einen Spannungsregler und der wenigstens eine Betriebswert durch die Betriebsspannung verwirklicht ist. Hierdurch kann insbesondere vermieden werden, dass die Spannung eines Akkumulators zu schnell wieder unter die Betriebswertgrenze des Akkumulators sinkt, wodurch ein Abschalten des Elektromotors zum Schutz des Akkumulators oder anderer Systeme verhindert und gleichzeitig die Verwendung des Elektrowerkzeugs fortgesetzt werden kann.

Darüber hinaus wird die Aufgabe erfindungsgemäss durch ein Verfahren zum Steuern eines Elektromotors in einem netzunabhängig betriebenen Elektrowerkzeug durch ein zeitgesteuertes Überwachen einer Überwachungsbetriebswertgrenze mittels einer Überwachungseinrichtung, wobei die Überwachungsbetriebswertgrenze oberhalb einer Betriebswertgrenze eines Akkumulators liegt.

Erfindungsgemäss enthält das Verfahren ein Einstellen wenigstens eines Betriebswertes des Elektromotors durch Festlegen eines PWM-Duty-Cycles eines Betriebswertreglers auf den niedrigeren eines ersten Werts oder eines zweiten Werts, wobei der erste Wert aus der letzten Stellung des Widerstandsbauelements ableitbar ist und der zweite Wert dem zum Einstellen des wenigstens einen Betriebswertes zuletzt verwendeten PWM-Duty-Cycle zuzüglich eines Offset-Werts entspricht, wenn der wenigstens eine Betriebswert des Akkumulators oberhalb der Überwachungsbetriebswertgrenze liegt.

Hierdurch wird vermieden, dass der wenigstens eine Betriebswert eines Akkumulators zu schnell wieder unter die Betriebswertgrenze für den Akkumulator sinkt, wodurch ein Abschalten des Elektromotors zum Schutz des Akkumulators oder anderer Systeme vermieden und gleichzeitig die Verwendung des Elektrowerkzeugs fortgesetzt werden kann.

Darüber hinaus kann gemäss einer weiteren Ausgestaltung der vorliegenden Erfindung ein Einstellen der Betriebswertgrenze in Abhängigkeit zu einem Temperaturwert vorgesehen sein. Bei dem Temperaturwert kann es sich beispielsweise um die Temperatur des Akkumulators oder um die Temperatur des Elektrogeräts handeln. Es ist jedoch auch möglich, dass der Temperaturwert der Temperatur des Akkumulators und der Temperatur des Elektrogeräts entspricht. Das heisst, dass der Temperaturwert entweder nur an die Temperatur des Akkumulators oder nur an die Temperatur des Elektrogeräts ohne Berücksichtigung der Temperatur des Akkumulators einstellbar ist. Darüber hinaus kann es auch möglich sein, dass sich der Temperaturwert aus einer Kombination der Temperatur des Akkumulators sowie der Temperatur des Elektrogeräts ergibt. Des Weiteren kann es auch möglich sein, dass für den Temperaturwert zusätzlich oder ausschliesslich die Umgebungstemperatur des Akkumulators und/oder des Elektrogeräts für die Einstellung der Unterspannungsgrenze berücksichtigt wird.

In Abhängigkeit vom jeweiligen Temperaturwert kann die Betriebswertgrenze niedriger oder höher eingestellt werden. Hierbei ist vorgesehen, dass bei einem tiefen Temperaturwert die Betriebswertgrenze niedriger eingestellt wird, wobei jedoch zu beachten ist, dass die Betriebswertgrenze stets unterhalb der Überwachungsbetriebswertgrenze liegt. Dementsprechend wird bei einem tiefen Temperaturwert die Betriebswertgrenze höher eingestellt.

Gemäss einer weiteren Ausgestaltungsform der vorliegenden Erfindung kann ein Einstellen des Offset-Werts entspricht einem prozentualen Anteil des zuletzt verwendeten PWM-Duty-Cycle zur Ansteuerung des Elektromotors vorgesehen sein. Insbesondere kann der prozentuale Anteil einem Wert zwischen 2% bis 20% des zuletzt verwendeten PWM-Duty-Cycle zur Ansteuerung des Elektromotors entsprechen. Es ist jedoch auch möglich, dass ein höherer oder auch niedrigerer Offset-Wert in Abhängigkeit zu einem Temperaturwert verwendet werden kann. Bei dem Temperaturwert kann es sich beispielsweise um die Temperatur des Akkumulators oder um die Temperatur des Elektrogeräts handeln. Es ist jedoch auch möglich, dass der Temperaturwert der Temperatur des Akkumulators und der Temperatur des Elektrogeräts entspricht. Das heisst, dass der Temperaturwert entweder nur an die Temperatur des Akkumulators oder nur an die Temperatur des Elektrogeräts ohne Berücksichtigung der Temperatur des Akkumulators einstellbar ist. Darüber hinaus kann es auch möglich sein, dass sich der Temperaturwert aus einer Kombination der Temperatur des Akkumulators sowie der Temperatur des Elektrogeräts ergibt. Des Weiteren kann es auch möglich sein, dass für den Temperaturwert zusätzlich oder ausschliesslich die Umgebungstemperatur des Akkumulators und/oder des Elektrogeräts für die Einstellung der Unterspannungsgrenze berücksichtigt wird.

Des Weiteren kann gemäss einer weiteren Ausgestaltung der vorliegenden Erfindung ein Einstellen der zeitlichen Überwachung der Überwachungsbetriebswertgrenze in zeitlichen Abständen vorgesehen sein. Insbesondere kann der zeitliche Abstand einem Wert zwischen 1ms bis 100ms entsprechen. Es ist jedoch auch möglich, dass grössere oder kleinere zeitlichen Abständen zur Überwachung des wenigstens eines Betriebswertes des Akkumulators in Abhängigkeit zu einem Temperaturwert verwendet werden können. Bei dem Temperaturwert kann es sich beispielsweise um die Temperatur des Akkumulators oder um die Temperatur des Elektrogeräts handeln. Es ist jedoch auch möglich, dass der Temperaturwert der Temperatur des Akkumulators und der Temperatur des Elektrogeräts entspricht. Das heisst, dass der Temperaturwert entweder nur an die Temperatur des Akkumulators oder nur an die Temperatur des Elektrogeräts ohne Berücksichtigung der Temperatur des Akkumulators einstellbar ist. Darüber hinaus kann es auch möglich sein, dass sich der Temperaturwert aus einer Kombination der Temperatur des Akkumulators sowie der Temperatur des Elektrogeräts ergibt. Des Weiteren kann es auch möglich sein, dass für den Temperaturwert zusätzlich oder ausschliesslich die Umgebungstemperatur des Akkumulators und/oder des Elektrogeräts für die Einstellung der Betriebswertgrenze berücksichtigt wird.

Darüber hinaus kann gemäss einer weiteren vorteilhaften Ausgestaltung der vorliegenden Erfindung es auch möglich sein, dass die Überwachungsbetriebswertgrenze durch eine Überwachungsspannungsgrenze, die Betriebswertgrenze durch eine Unterspannungsgrenze, der Betriebswertregler durch einen Spannungsregler und der wenigstens eine Betriebswert durch die Betriebsspannung verwirklicht ist. Hierdurch kann insbesondere vermieden werden, dass die Spannung eines Akkumulators zu schnell wieder unter die Betriebswertgrenze des Akkumulators sinkt, wodurch ein Abschalten des Elektromotors zum Schutz des Akkumulators oder anderer Systeme verhindert und gleichzeitig die Verwendung des Elektrowerkzeugs fortgesetzt werden kann.

Weitere Vorteile ergeben sich aus der folgenden Zeichnungsbeschreibung. In der Zeichnung ist ein Ausführungsbeispiel der vorliegenden Erfindung dargestellt. Die Zeichnung, die Beschreibung und die Ansprüche enthalten zahlreiche Merkmale in Kombination. Der Fachmann wird die Merkmale zweckmässigerweise auch einzelnen betrachten und zu sinnvollen weiteren Kombinationen zusammenfassen.

Es zeigt:

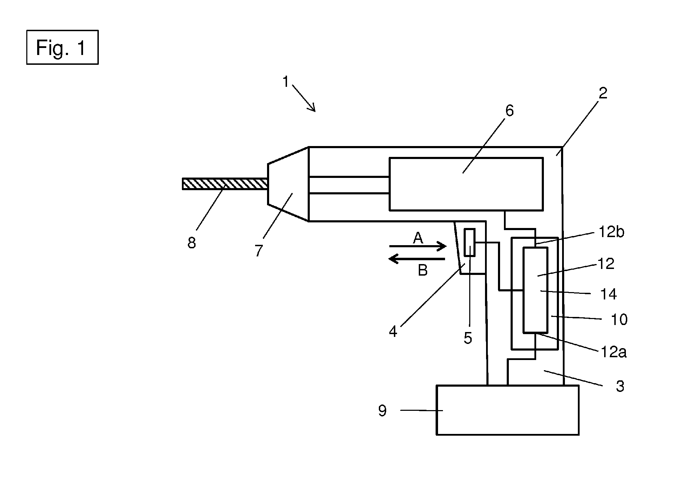

- Fig. 1: eine schematische Ansicht eines erfindungsgemässen netzunabhängig betriebenen Elektrowerkzeug.

### Ausführungsbeispiel der Erfindung

In Fig. 1 ist ein Elektrowerkzeug 1, bei dem es sich um eine Bohrmaschine, einen Bohrhammer, einen Schleifer, eine Säge, einen Hobel, einen Winkelschleifer o. dgl. handeln kann, schematisch gezeigt. Vorliegend handelt es sich bei dem Elektrowerkzeug 1 um eine Akku-Bohrmaschine.

Das Elektrowerkzeug 1 enthält ein Gehäuse 2 mit einem Handgriff 3. Im Gehäuse 2 befindet sich ein Elektromotor 6, der zum Antrieb eines in einer Werkzeugaufnahme 7 befindlichen Werkzeugs 8, wie eines Bohrers, dient. Beispielsweise kann es sich beim Elektromotor 6 um einen Gleichstrommotor handeln, wobei der Elektromotor 6 mittels eines in den Handgriff 3 einsteckbaren, aufladbaren, aus einem Akku bestehenden Energiespeichers 9 mit elektrischer Energie versorgt wird. Am Handgriff 3 befindet sich ein Schalter 4 mit einem als Potentiometer ausgestalteten Widerstandsbauteil 5 zum Variieren der Drehzahl, des Drehmoments o.dgl. des Elektromotors 6.

Im Gehäuse 2 befindet sich ausserdem eine Steuereinrichtung 10 zum Ansteuern des Elektromotors 6. Die Steuereinrichtung 10 weist einen als Betriebswertregler ausgestalteten Spannungsregler 12 auf, der an einen als Spannungsreglereingang ausgestalteten Betriebswertreglereingang 12a den von dem Akku 9 bereitgestellten Betriebswert, hier in Form der Akkuspannung, erhält.

Der Spannungsregler 12 ist mit einer zeitdiskreten Überwachungseinrichtung 14 zur Überwachung einer in Form einer Überwachungsspannungsgrenze ausgestalteten Überwachungsbetriebswertgrenze ausgestattet, um die vom Akku 9 bereitgestellte Akkuspannung auf eine veränderliche Betriebsspannung für den Elektromotor 6 herabzusetzen. Die Überwachungseinrichtung 14 ist als Ansteuerelektronik ausgestaltet. Die zeitdiskrete Überwachung erfolgt in regelmässigen Zeitabschnitten beispielsweise alle 10ms. Es ist jedoch auch möglich je nach Anwendungsfall höhere oder niedrigere Zeitabschnitte festzulegen.

Die Betriebsspannung wird über einen Spannungsreglerausgang 12b des Spannungsreglers 12 an den Elektromotor 6 angelegt. Die als Unterspannungsgrenze ausgestaltete Betriebswertgrenze dient als Schwellwert für die Überwachungseinrichtung 14, bei dessen Unterschreiten das Elektrowerkzeug 1 abgeschaltet wird, um ein weiteres Entladen des Akkus 9 und damit einen möglichen Schaden zu vermeiden.

Die für den Akku 9 vorgesehene Überwachungsspannungsgrenze dient wiederum dazu in den Betrieb des Elektrowerkzeugs 1 regulierend einzugreifen, wenn die Spannung des Akkus 9 drastisch abgenommen hat. Der regulierende Eingriff in den Betrieb des Elektrowerkzeugs 1 erfolgt sobald die Spannung des Akkus 9 die zuvor festgelegte Überwachungsspannungsgrenze unterschreitet. Die Überwachungsspannungsgrenze kann dabei abhängig von der jeweiligen Temperatur des Akkus 9 und/oder des Elektrowerkzeugs 1 eingestellt werden, wobei die Überwachungsspannungsgrenze umso niedriger eingestellt wird, je niedriger die Temperatur ist. Der durch das Unterschreiten der Überwachungsspannungsgrenze ausgelöste Eingriff in den Betrieb des Elektrowerkzeugs 1 erfolgt durch ein Herabsetzen der Betriebsspannung des Elektrowerkzeugs 1 mit Hilfe des Spannungsreglers 12. Alternativ kann auch jeder andere Betriebswert des Akkus 9, jede andere Überwachungsbetriebswertgrenze und/oder jeder andere Betriebswert des Elektrowerkzeugs 1 verwendet werden.

Durch das Herabsetzen der Betriebsspannung durch den Spannungsregler 12 wird ein weiterer Spannungsabfall unter die Unterspannungsgrenze des Akkus 9 und damit ein zwangsläufiges Abschalten des Elektrowerkzeugs 1 zur Vermeidung einer weiteren Entladung des Akkus 9 (Gefahr der Tiefentladung) verhindert.

In dem vorliegenden Fall ist der Spannungsregler 12 als Pulsweitenmodulation-Regler (PWM-Regler) ausgebildet, d.h. die Steuerung des Elektromotors 4 erfolgt über einen sogenannten Duty-Cycle (Tastgrad). Der Spannungsregler 12 steht dafür in Verbindung mit dem Schalter 4 sowie mit dem Potentiometer 5.

Zur Einstellung des Betriebsspannung und folglich zur Einstellung der Drehzahl, des Drehmoments o.dgl. wird der Schalter 4 in Richtung A gedrückt. Durch das Drücken des Schalters 4 verändert sich die Stellung des Potentiometers 5, worauf ein Signal an den Spannungsregler 12 geschickt wird. Das Signal entspricht dabei der jeweiligen Position des Potentiometers 5. Je weiter der Schalter 4 in Richtung A gedrückt wird, desto weiter erhöht sich die Drehzahl bzw. das Drehmoment des Elektromotors 6. Wenn der Druck auf den Schalter 4 reduziert wird, d.h. aufgrund einer nicht gezeigten Feder in eine Richtung B bewegt wird, verringert sich auch die Drehzahl bzw. das Drehmoment des Elektromotors 6. Der als PWM-Regler ausgestaltete Spannungsregler 12 sendet zur Steuerung der Drehzahl bzw. des Drehmoments ein Duty-Cycle an den Elektromotor 6. Der Duty-Cycle entspricht dabei der jeweiligen Stellung des Schalters 4 bzw. des Potentiometers 5.

Im Falle, dass beispielsweise aufgrund einer niedrigen Temperatur die zur Verfügung stehende Spannung im Akku 9 unter die Überwachungsspannungsgrenze fällt, greift (wie bereits vorstehend erwähnt) die Überwachungseinrichtung 14 regulierend in den Betrieb des Elektrogeräts 1 ein. Hierzu wird die Betriebsspannung des Elektrogeräts 1 über ein Einstellen des DutyCycles soweit festgelegt, dass die Akkuspannung wieder oberhalb der Überwachungsspannungsgrenze liegt. Die Leistung des Elektromotors 1, d.h. dessen Drehzahl bzw. Drehmoment, ist dadurch reduziert, jedoch wird ein Abschalten wegen der Gefahr der Unterspannung bzw. Tiefentladung durch die Unterspannungsabschaltung vermieden.

Wenn die Akkuspannung wieder oberhalb der Überwachungsspannungsgrenze liegt, wird die Einstellung der Betriebsspannung wieder direkt aus der aktuellen Stellung des Potentiometers abgeleitet. Um jedoch zu verhindern, dass die Akkuspannung aufgrund einer wieder erhöhten Betriebsspannung frühzeitig wieder unterhalb der Überwachungsspannungsgrenze fällt, wird der für den jeweils nächsten Zeitscheibenzyklus verwendete PWM-Duty-Cycle des Spannungsregler zum Einstellen der Betriebsspannung limitiert. Für diese Limitierung wird entweder ein PWM-Duty-Cycles gewählt, der aus der aktuellen Stellung des Potentiometers ableitbar ist, oder der dem zuletzt verwendeten PWM-Duty-Cycle zuzüglich eines Offset-Werts entspricht, je nach dem welcher dieser beiden PWM-Duty-Cyclen niedriger ist.

Der Offset-Wert kann dabei beispielsweise 10% des zuletzt verwendeten Duty-Cycle entsprechen. Es ist jedoch auch möglich je nach Anwendungsfall einen höheren oder niedrigeren Offset-Wert festzulegen. Zum Einstellen der Betriebsspannung wird der Duty-Cycle zur Steuerung des Elektromotors 6 verwendet, der dem niedrigeren der beiden zuvor beschriebenen Duty-Cycles entspricht. Für den Fall, dass der Anwender des Elektrowerkzeugs 1 von sich aus den Druck auf den Potentiometer 5 bzw. Schalter 4 reduziert und dadurch von dem Spannungsregler 12 ein entsprechender Duty-Cycle zur Steuerung des Elektromotors 6 gesendet wird, der niedriger ist als der zuletzt gesendete Duty-Cycle zuzüglich eines Offset-Werts, so wird dieser niedrigere Duty-Cycle (abgeleitet aus der neuen, weniger weit gedrückten Schalterstellung) zur Einstellung der Betriebsspannung verwendet. Für den Fall, dass der zuletzt verwendete Duty-Cycle zuzüglich eines Offset-Werts niedriger ist als der aktuell bzw. zuletzt verwendete Duty-Cycle (abgeleitet aus der neuen, weniger weit gedrückten Schalterstellung) so wird folglich dieser Duty-Cycle (aktuelle Duty-Cycle zuzüglich eines Offset-Werts) zur Einstellung der Betriebsspannung verwendet.

Durch den Vergleich eines ersten und eines zweiten Duty-Cycles sowie die Verwendung des niedrigeren der beiden Duty-Cycles kann die Betriebsspannung eines Elektrogeräts 1 so eingestellt werden, dass dadurch ein erneutes frühzeitiges Unterschreiten der Überwachungsspannungsgrenze und folglich ein Abschalten durch eine Unterspannungsabschaltung vermieden und gleichzeitig die Verwendung des Elektrogeräts 1 fortgesetzt werden kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Netzunabhängig betriebenes Elektrowerkzeug (1) enthaltend:
- einen Elektromotor (6) zum Betreiben des Elektrowerkzeugs (1);
- einen Akkumulator (9);
- eine Überwachungseinrichtung (14) zur Überwachung einer Überwachungsbetriebswertgrenze, wobei die Überwachungsbetriebswertgrenze oberhalb einer Betriebswertgrenze des Akkumulators (9) liegt;
- ein verstellbares Widerstandsbauelement (5); und
- einen Betriebswertregler (12) zum Einstellen wenigstens eines an dem Elektromotor (1) anliegenden Betriebswerts mittels einer Pulsweitenmodulation (PWM),
**dadurch gekennzeichnet, dass**
ein PWM-Duty-Cycle des Betriebswertreglers (12) zum Einstellen des wenigstens einen Betriebswerts festgelegt wird, der einem ersten Wert oder einem zweiten Wert entspricht, bei dem der erste Wert aus der aktuellen Stellung des Widerstandsbauelements (5) ableitbar ist und der zweite Wert dem zum Einstellen des wenigstens einen Betriebswerts zuletzt verwendeten PWM-Duty-Cycle zuzüglich eines Offset-Werts entspricht,
wobei zum Einstellen des wenigstens einen Betriebswerts der niedrigere des ersten oder zweiten Werts für den PWM-Duty-Cycle gewählt wird, wenn der wenigstens eine Betriebswert des Akkumulators (9) oberhalb der Überwachungsbetriebswertgrenze liegt.

2. Elektrowerkzeug (1) nach Anspruch 1,
**dadurch gekennzeichnet, dass** die Betriebswertgrenze in Abhängigkeit zu einem Temperaturwert einstellbar ist.

3. Elektrowerkzeug (1) nach einem der Ansprüche 1 oder 2,
**dadurch gekennzeichnet, dass** der Offset-Wert einem prozentualen Anteil des zuletzt verwendeten PWM-Duty-Cycle zur Ansteuerung des Elektromotors (6) entspricht.

4. Elektrowerkzeug (1) nach einem der Ansprüche 1 bis 3,
**dadurch gekennzeichnet, dass** eine zeitgesteuerte Überwachungsvorrichtung (14) zum periodischen Überwachen des wenigstens einen Betriebswerts des Akkumulators (9) vorgesehen ist.

5. Elektrowerkzeug (1) nach Anspruch 4,
**dadurch gekennzeichnet, dass** die zeitgesteuerte Überwachungsvorrichtung in zeitlichen Abständen den wenigstens einen Betriebswert des Akkumulators überwacht.

6. Elektrowerkzeug (1) nach wenigstens einem der Ansprüche 1 bis 5,
**dadurch gekennzeichnet, dass** die Überwachungsbetriebswertgrenze durch eine Überwachungsspannungsgrenze, die Betriebswertgrenze durch eine Unterspannungsgrenze, der Betriebswertregler durch einen Spannungsregler und der wenigstens eine Betriebswert durch die Betriebsspannung verwirklicht ist.

7. Verfahren zum Steuern eines Elektromotors (6) in einem netzunabhängig betriebenen Elektrowerkzeug (1), durch ein zeitgesteuertes Überwachen einer Überwachungsbetriebswertgrenze mittels einer Überwachungseinrichtung (14), wobei die Überwachungsbetriebswertgrenze oberhalb einer Betriebswertgrenze eines Akkumulators (9) liegt,
**gekennzeichnet durch** ein Einstellen wenigstens eines Betriebswerts des Elektromotors (6) **durch** Festlegen eines PWM-Duty-Cycles eines Betriebswertreglers (12) auf den niedrigeren eines ersten Werts oder eines zweiten Werts, wobei der erste Wert aus der letzten Stellung des Betriebswertreglers (5) ableitbar ist und der zweite Wert dem zum Einstellen des wenigstens einen Betriebswerts zuletzt verwendeten PWM-Duty-Cycle zuzüglich eines Offset-Werts entspricht, wenn der wenigstens eine Betriebswert des Akkumulators (9) oberhalb der Überwachungsbetriebswertgrenze liegt.

8. Verfahren nach Anspruch 7,
**gekennzeichnet durch** ein Einstellen der Betriebswertgrenze in Abhängigkeit zu einem Temperaturwert.

9. Verfahren nach einem der Ansprüche 7 oder 8,
**gekennzeichnet durch** ein Einstellen des Offset-Werts entspricht einem prozentualen Anteil des zuletzt verwendeten PWM-Duty-Cycle zur Ansteuerung des Elektromotors (6).

10. Verfahren nach einem der Ansprüche 7 bis 9,
**gekennzeichnet durch** ein Einstellen der zeitlichen Überwachung der Überwachungsbetriebswertgrenze in zeitlichen Abständen.

11. Verfahren (1) nach wenigstens einem der Ansprüche 7 bis 10,
**dadurch gekennzeichnet, dass** die Überwachungsbetriebswertgrenze durch eine Überwachungsspannungsgrenze, die Betriebswertgrenze durch eine Unterspannungsgrenze, der Betriebswertregler durch einen Spannungsregler und der wenigstens eine Betriebswert durch die Betriebsspannung verwirklicht ist.
